# EUROPEAN PATENT SPECIFICATION

(11) **EP 3 484 273 B1**
(45) Date of publication and mention of the grant of the patent: **04.11.2020**
(21) Application number: 17771599.2
(22) Date of filing: 11.07.2017
(51) Int. Cl.: A01G 15/00

(54) **ACOUSTIC SHOCK WAVE GENERATOR**
AKUSTISCHE WELLENSCHOCKGENERATOR
DISPOSITIF DE GÉNÉRATION DE CHOCS D'ONDE ACOUSTIQUE

(30) Priority: 12.07.2016 RO 201600497
(43) Date of publication of application: 22.05.2019
(73) Proprietor: Badila, Dumitru, Bucharest (RO); Manea, Dragos-Costin, Focsani, Vrancea (RO)
(72) Inventor: Badila, Dumitru, Bucharest (RO); Manea, Dragos-Costin, Focsani, Vrancea (RO)
(74) Representative: Fierascu, Cosmina-Catrinel
(86) International application number: PCT/RO2017/000013
(87) International publication number: WO 2018/012992

(56) References cited:
- WO-A1-2013/078485
- BE-A6- 1 017 387
- US-A- 5 445 321
- US-A1- 2013 078 485
- US-B1- 8 684 970
- US-B1- 8 840 835

## Description

The invention relates to an acoustic shock waves generator, intended for modifying the local meteorological conditions, such as the protection against hail, as well as to determine the birds from airports or crop fields to fly away and to determine large animals, such as bears, wild boars, etc. to flee from the land properties.

There is known an acoustic shock waves generator presented in the patent application BE1017387 A6**,** which may be employed against hail, comprising a combustion chamber for generating the shock waves, which is provided with an outlet opening for creating the shock waves in the upper atmospheric layers, in order to create a disturbance in the hail formation area, thereby preventing it from being formed, in the combustion chamber there being provided an injection element which has a nozzle for gas fuel injection into the combustion chamber, the injection element having at least a first gas fuel supply pipe and at least a second pipe for the supply with the combustion air, the first gas fuel supply pipe being provided coaxially inside the second pipe.

There is also known a shock waves generator employed for combating the hail formation, disclosed in the patent application WO2013078485 which comprises a shock waves generator by detonating an explosive mixture in a combustion chamber and directing the generated shock waves towards the upper atmospheric layers, a fuel supply system and some combustion air supply windows, provided with some flaps mounted inside, an ignition mean, a control system for issuing command signals for the hail-preventing system, an electric power supply system, a hail or hail creating conditions detector/warning device, which is in connection with the control system, provided with an antenna for receiving the thermal signals, the combustion chamber being in connection, by means of a connecting body, with a tapered nozzle for directing the shock waves towards the upper atmospheric layers.

The technical problem solved by the invention consists in diminishing the damages caused by hail in agriculture.

The acoustic shock waves generator according to claim 1, is intended for modifying local meteorological conditions, such as protection against hail, as well as to determine birds from airports or crop fields to fly away and to determine large animals, such as bears, wild boars, etc., to flee from land properties.

The acoustic shock waves generator according to the invention, presents the following advantages:
- safety in exploitation;
- low exploitation costs;
- energetics autonomy.

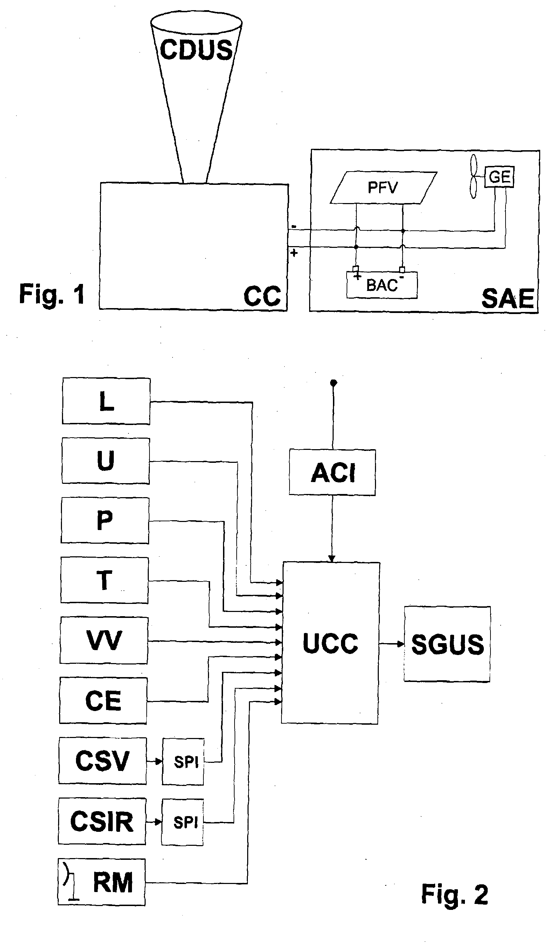

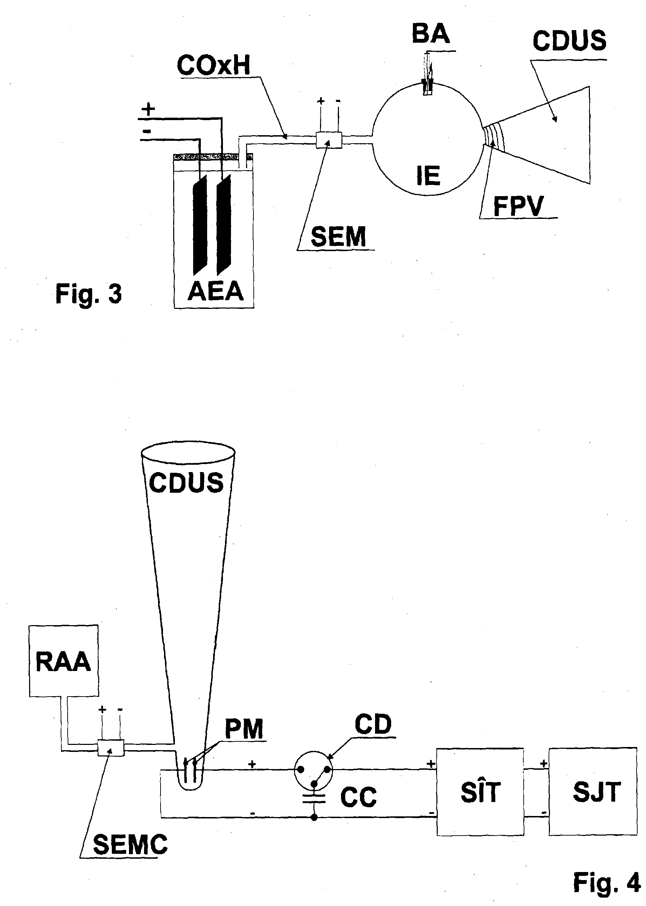

There is given hereinafter an embodiment of the invention, in connection with Figs.1-4, which represent:
Fig.1, general view of the acoustic shock waves generator;
Fig.2, the command system of the acoustic shock waves generator;
Fig.3, the acoustic shock waves generation system;
Fig.4, another embodiment of the acoustic shock waves generation system.

The acoustic shock waves generator, intended for modifying the local meteorological conditions, such as the protection against hail, as well as to determine the birds from airports or crop fields to fly away and to determine large animals, such as bears, wild boars, etc. to flee from the land properties, according to the invention, is provided with a control and command unit **UCC,** which is in connection with a shock waves generation system **SGUS.**

The control and command unit **UCC** receives signals from the upper atmospheric layers by means of a light sensor **L,** a humidity sensor **U,** a pressure sensor **P,** a temperature sensor **T,** a wind velocity measuring sensor **W** and an electromagnetic field measuring sensor **CE.**

The control and command unit **UCC** is further provided with a **CSV** camera in the visible spectrum, a **CSIR** camera in the infrared spectrum, as well as a meteorological radar **RM.**

The **CSV** camera in the visible spectrum and the camera **CSIR** in the infrared spectrum are provided with one **SPI** software for image processing.

The control and command unit **UCC** is further provided with an antenna, **ACI,** for connecting to the Internet.

The **SGUS** system for generating the shock waves is introduced into a container-housing **CC** provided with a **CDUS** cone for directing the shock waves into the upper atmospheric layers.

The container-housing **CC** is in connection with a power supply source **SAE** which has some photovoltaic panels **PFV,** as well as a wind generator **GE,** for supplying power to the system for protection against hail and for modifying the local meteorological conditions, which, in their turn, are connected to some battery packs **BAC.**

Inside the container-housing **CC** there is provided a water electrolysis apparatus **AEA,** its power being supplied from the power supply source **SAE,** which carries out the water electrolysis and generates an oxygen and hydrogen mixture, which is directed, by means of a gas supply pipe **COxH** and of an electromagnetic valve **SEM** into an explosion enclosure **IE,** the gaseous oxygen - hydrogen mixture being ignited by means of an ignition spark plug **BA.**

The explosion enclosure **IE** is in connection with the cone **CDUS,** directing the shock waves into the upper atmospheric layers.

The cone **CDUS** for directing the shock waves into the upper atmospheric layers can be provided inside with a variable pitch thread **FPV,** whose role is to amplify the shock waves.

In an embodiment of the invention, the **SGUS** for generating the shock waves is provided with some metal plates **PM** that may be concentric, with an external cylinder and with a central shaft, insulated in relation to each another, or parallel, located at a distance of several millimeters away from each other, connected by means of a double switch **CD** to a high-capacity capacitor **CC,** supplied from a high voltage power supply **SÎT,** supplied from a low voltage power supply **SJT.** An example of high voltage power supply **SÎT** may be considered a power supply providing 300 Volts or more.

Between the metal plates **PM** there is introduced water from a water supply tank **RAA,** the water flow rate being controlled by means of an electromagnetic control valve **SEMC.**

When the metal plates **PM** are put in connection with the high-capacity capacitor **CC,** by maneuvering the switch **CD,** the circuit is closed by the water between the two plates and the water explodes.

The distance between the plates **PM** is directly proportional to the applied voltage so that the longer distance between the plates **PM** and the bigger the amount of water is, the higher the voltage and the bigger the amount of the discharged energy has to be.

Water has insulating properties when an electrical current is passed through it, and, as any insulator, it has a dielectric constant which varies according to several factors (pressure, temperature, salts content, etc). Depending on these factors, the required voltage for creating an electric discharge for breaking through this insulation medium (water) is variable.

In an embodiment, for breaking through the insulating medium - the water, there was employed a 300 V voltage, an energy stored in the capacitor of about 30 Joules and a water amount of 0.2-0.3 ml with a 0.9% concentration of NaCl. The acoustic wave resulting from the electric discharge (explosion) is powerful. By employing higher energies (higher capacity capacitors at the same voltage, or by increasing the voltage) there can be obtained more powerful acoustic effects (explosions).

The shock waves are transmitted towards the upper atmospheric layers by means of the cone **CDUS** for directing the shock waves, said cone being positioned on the container-housing **CC.**

The shock waves generator according to the invention, can be operated manually, in an automatic mode or in a mixed mode, the human operator monitoring the system and applying a real-time correction, if he considers that to be necessary, triggering the acoustic shock waves generation, even if the control and command unit **UCC** does not detect the probability of hail occurrence.

The generator may work independently or within a complex system (in cluster mode) consisting of several generators for the purpose of covering a larger territory, there being possible the communication, by means of the antenna **ACI,** with a center where specialized personnel may make the decision of starting the system.

### References

1. J.Plasma Physics (2000), vol.63, Part 2, pp.115÷128. Printed in the United Kingdom, # 2000 Cambridge University Press, 115, Arc-liberated chemical energy exceeds electrical input energy, PETER GRANEAU, NEAL GRANEAU, GEORGE HATHAWAY and RICHARD L. HULL;
2. https://www.youtube.com/watch?v=7nUle4RsSrg&t=1s;
3. http://www.engineeringtoolbox.com/liquid-dielectric-constants-d_1263.html;
4. https://en.wikipedia.org/wiki/Relative_permittivity;
5. https://www.youtube.com/watch?v=TcBb1CIRH8w, (Richard Hull and Peter Graneau on water as a power source)

## Claims

1. Acoustic shock waves generator comprising:
- a control and command unit **(UCC)** located inside a container-housing **(CC),** connected to a power supply **(SAE)** :
- a cone **(CDUS)**, connected with its apex to the container-housing (CC) and having its base oriented toward the sky for directing the shock waves,
- a system for generating the shock waves **(SGUS)** connected to the control and command unit **(UCC),**
wherein the shock waves generating system **(SGUS)** is a system for generating an electric discharge in an insulating medium comprising water, oxygen and hydrogen, and wherein the control and command unit **(UCC)** is in connection with a light sensor **(L),** a humidity sensor **(U),** a pressure sensor **(P),** a temperature sensor **(T),** a wind velocity measuring vector **(VV)**, a sensor **(CE)** for measuring the electromagnetic field, as well as with a camera **(CSV)** in the visible spectrum, a camera **(CSIR)** in the infrared spectrum, each camera having a software **(SPI)** for image processing, as well as a meteorological radar **(RM).**

2. Generator according to claim 1, wherein the system for generating the shock waves consists of an electrolysis apparatus **(AEA)** which generates an oxygen and hydrogen mixture flow, which is directed through the pipe **(CoxH)** in the explosion enclosure **(IE),** provided with an ignition spark plug **(BA)** and with a cone **(CDUS)** for directing the shock waves.

3. Generator according to claim 1, wherein the system for generating the shock waves comprising:
- a water supply tank **(RAA);**
- an explosion enclosure **(IE),** inside the cone **(CDUS)** for directing the shock waves;
- a valve **(SEMC)** for supplying the explosion enclosure **(IE)** with water from the **(RAA)** tank;
- metal plates **(PM)** provided inside the explosion enclosure **(IE);**
- a high-capacity capacitor **(CC)** connected through the switch **(CD)** to the plates **(PM)** and to a high voltage power supply **(SIT).**

4. Generator according to claim 3, wherein the metal plates **(PM)** are located at the tip of the cone **(CDUS).**

5. Generator according to claims 1 and 2, wherein the oxygen and hydrogen mixture flow in the pipe **(CoxH)** inside the explosure enclosure **(IE)** is connected through an electromagnetic valve **(SEM).**

6. Generator according to anyone of the preceding claims, wherein the control and command unit (UCC) is provided with an antenna (**ACI**) for connecting to Internet.

7. Generator according to anyone of the preceding claims, wherein the cone **(CDUS)** for directing the shock waves is provided on the inside with a variable pitch thread **(FPV).**

8. Generator according to anyone of the preceding claims, wherein the power supply **(SAE)** additionally comprises photovoltaic panels **(PFV)** and a wind generator **(GE)** connected to the battery packs **(BAC).**

9. Method for generating shock waves by employing the acoustic shock waves generator to any of the claims from 1 to 8, which comprises the following steps:
- generating an electric discharge in a medium containing water, oxygen and hydrogen,
- directing the shock wave towards the upper atmospheric layers, by means of a cone **(CDUS)** for directing the shock waves.

10. Use of the generator according to anyone of the claims from 1 to 8 for modifying local meteorogical conditions for protection against hail.

11. Use of the generator according to anyone of the claims from 1 to 8 to determine birds from airports or from crop fields to fly away and to determine large animals, such as bears and/or wild boars, etc., to flee from land properties.

12. Use of the method according to claim 9 for modifying local meteorogical conditions, such as for protection against hail.

13. Use of the method according to claim 9 to determine birds from airports or from crop fields to fly away and to determine large animals, such as bears and/or wild boars, etc., to flee from land properties.

## Patentansprüche

1. Akustischer Stoßwellengenerator bestehend aus:
- einer Steuer- und Kontrolleinheit **(UCC),** die sich in einem Containergehäuse **(CC)** befindet und an eine Stromversorgung **(SAE)** verbunden ist
- einem Kegel **(CDUS),** der mit seiner Spitze mit dem Containergehäuse **(CC)** verbunden ist und dessen Basis zum Himmel gerichtet ist, um die Stoßwellen zu lenken,
- ein System zur Erzeugung der Stoßwellen **(SGUS),** das mit der Steuer- und Kontrolleinheit **(UCC)** verbunden ist,
wobei
- das System zur Erzeugung der Stoßwellen **(SGUS)** ein System ist, zur Erzeugung einer elektrischen Entladung in einem isolierenden Medium, das Wasser, Sauerstoff und Wasserstoff enthält, und
wobei
die Steuer- und Kontrolleinheit **(UCC)** mit einem Lichtsensor **(L),** einem Feuchtesensor **(U),** einem Drucksensor **(P),** einem Temperatursensor **(T),** einem Windgeschwindigkeits-Messvektor **(VV),** einem Sensor **(CE)** zur Messung des elektromagnetischen Feldes, sowie mit einer Kamera **(CSV)** im sichtbaren Spektrum, einer Kamera **(CSIR)** im Infrarotspektrum, wobei jede Kamera eine Software **(SPI)** zur Bildverarbeitung aufweist, sowie mit einem meteorologischen Radar **(RM)** in Verbindung steht.

2. Generator nach Anspruch 1, wobei das System zur Erzeugung der Schockwellen aus einem Elektrolyseapparat **(AEA)** besteht, der einen Strom gebildet aus einem Sauerstoff- und Wasserstoff-Gemisch erzeugt, der durch das Rohr **(CoxH)** im Explosionsraum **(IE)** geleitet wird, der mit einer Zündkerze **(BA)** und mit einem Kegel **(CDUS)** zur Lenkung der Schockwellen versehen ist.

3. Generator nach Anspruch 1, wobei das System zur Erzeugung der Stoßwellen Folgendes umfasst:
- einen Wasserversorgungsbehälter **(RAA);**
- einen Explosionsraum **(IE)** im Inneren des Kegels **(CDUS)** zur Lenkung der Schockwellen;
- ein Ventil **(SEMC)** zur Versorgung des Explosionsraums **(IE)** mit Wasser aus dem **(RAA)**-Behälter;
- Metallplatten **(PM),** die im Inneren des Explosionsraums **(IE)** vorgesehen sind;
- ein Hochkapazitätskondensator **(CC),** der über den Schalter **(CD)** mit den Platten (PM) und mit einer Hochspannungsversorgung **(SIT)** verbunden ist.

4. Generator nach Anspruch 3, wobei sich die Metallplatten **(PM)** an der Spitze des Kegels **(CDUS)** befinden.

5. Generator nach den Ansprüchen 1 und 2, wobei der Strom gebildet aus einem Sauerstoff- und Wasserstoff-Gemisch in dem Rohr **(CoxH)** innerhalb des Explosionsraums **(IE)** durch ein elektromagnetisches Ventil **(SEM)** verbunden ist.

6. Generator nach einem der vorstehenden Ansprüche, wobei die Steuer- und Kontrolleinheit **(UCC)** mit einer Antenne (**ACI**) zur Verbindung mit dem Internet ausgestattet ist.

7. Generator nach einem der vorstehenden Ansprüche, wobei der Kegel **(CDUS)** zur Lenkung der Stoßwellen auf der Innenseite mit einem Gewinde mit variabler Steigung **(FPV)** versehen ist.

8. Generator nach einem der vorstehenden Ansprüche, wobei die Stromversorgung **(SAE)** zusätzlich photovoltaische Paneele **(PFV)** und einen Windgenerator **(GE)** umfasst, die an die Batteriepackungen **(BAC)** angeschlossen sind.

9. Verfahren zur Erzeugung von Stoßwellen unter Verwendung des akustischen Stoßwellengenerators nach einem der Ansprüche von 1 bis 8, das die folgenden Schritte umfasst:
- Erzeugung einer elektrischen Entladung in einem Medium, das Wasser, Sauerstoff und Wasserstoff enthält,
- Lenkung der Schockwelle auf die oberen Atmosphärenschichten mittels eines Kegels **(CDUS)** zur Lenkung der Schockwellen.

10. Verwendung des Generators nach einem der Ansprüche von 1 bis 8 zur Veränderung der lokalen meteorologischen Bedingungen zum Schutz vor Hagel.

11. Verwendung des Generators nach einem der Ansprüche von 1 bis 8 um zu verursachen, dass Vögel von Flughäfen oder von Ackern wegfliegen und um zu verursachen, dass große Tiere, wie Bären und/oder Wildschweine usw., von besessenen Terrains fliehen.

12. Verwendung der Methode nach Anspruch 9 zur Veränderung der lokalen meteorologischen Bedingungen, z.B. zum Schutz vor Hagel.

13. Verwendung der Methode nach Anspruch 9 um zu verursachen, dass Vögel von Flughäfen oder von Ackern wegfliegen und um zu verursachen, dass große Tiere, wie Bären und/oder Wildschweine usw., von besessenen Terrains fliehen.

## Revendications

1. Générateur d'ondes de choc acoustiques comprenant:
- une unité de contrôle et de commande **(UCC)** située à l'intérieur d'un boîtier-conteneur **(CC),** connectée à une alimentation électrique **(SAE),**
- un cône **(CDUS),** connecté par son sommet au boîtier-conteneur **(CC)** et ayant sa base orientée vers le ciel pour diriger les ondes de choc,
- un système de génération des ondes de choc **(SGUS)** connecté à l'unité de contrôle et de commande **(UCC),**
où
- le système générateur d'ondes de choc **(SGUS)** est un système de génération d'une décharge électrique dans un milieu isolant comprenant de l'eau, de l'oxygène et de l'hydrogène, et
où
l'unité de contrôle et de commande **(UCC)** est en connexion avec un capteur de lumière **(L),** un capteur d'humidité **(U),** un capteur de pression **(P),** un capteur de température **(T),** un vecteur de mesure de la vitesse du vent **(VV),** un capteur **(CE)** pour mesurer le champ électromagnétique, ainsi qu'avec une caméra **(CSV)** dans le spectre visible, une caméra **(CSIR)** dans le spectre infrarouge, chaque caméra ayant un logiciel **(SPI)** de traitement d'image, ainsi qu'un radar météorologique **(RM).**

2. Générateur selon la revendication 1, dans lequel le système pour générer les ondes de choc se compose d'un appareil d'électrolyse **(AEA)** qui génère un flux de mélange d'oxygène et d'hydrogène, qui est dirigé à travers le tuyau **(CoxH)** dans l'enceinte d'explosion (**IE**), munie d'une bougie d'allumage **(BA)** et d'un cône **(CDUS)** pour diriger les ondes de choc.

3. Générateur selon la revendication 1, dans lequel le système pour générer les ondes de choc comprend:
- un réservoir d'alimentation en eau **(RAA);**
- une enceinte d'explosion (**IE**), à l'intérieur du cône **(CDUS)** pour diriger les ondes de choc;
- une vanne **(SEMC)** pour alimenter l'enceinte d'explosion (**IE**) en eau du réservoir (**RAA**) ;
- plaques métalliques **(PM)** prévues à l'intérieur de l'enceinte d'explosion (**IE**);
- un condensateur haute capacité **(CC)** connecté par l'interrupteur **(CD)** aux plaques **(PM)** et à une alimentation haute tension **(SIT).**

4. Générateur selon la revendication 3, dans lequel les plaques métalliques **(PM)** sont situées à la pointe du cône **(CDUS).**

5. Générateur selon les revendications 1 et 2, dans lequel le flux du mélange d'oxygène et d'hydrogène dans le tuyau **(CoxH)** à l'intérieur de l'enceinte d'explosion (**IE**) est raccordé par l'intermédiaire d'une vanne électromagnétique **(SEM).**

6. Générateur selon l'une quelconque des revendications précédentes, dans lequel l'unité de contrôle et de commande **(UCC)** est pourvue d'une antenne (**ACI**) pour se connecter à Internet.

7. Générateur selon l'une quelconque des revendications précédentes, dans lequel le cône **(CDUS)** pour diriger les ondes de choc est pourvu à l'intérieur d'un filetage à pas variable **(FPV).**

8. Générateur selon l'une quelconque des revendications précédentes, dans lequel l'alimentation électrique **(SAE)** comprend en outre des panneaux photovoltaïques **(PFV)** et un générateur éolien **(GE)** connecté aux blocs de batteries **(BAC).**

9. Procédé pour générer des ondes de choc en utilisant le générateur d'ondes de choc acoustiques selon l'une quelconque des revendications de 1 à 8, qui comprend les étapes suivantes:
- générer une décharge électrique dans un milieu contenant de l'eau, de l'oxygène et de l'hydrogène,
- diriger l'onde de choc vers les couches supérieures de l'atmosphère, au moyen d'un cône **(CDUS)** pour diriger les ondes de choc.

10. Utilisation du générateur selon l'une quelconque des revendications de 1 à 8 pour modifier les conditions météorologiques locales pour la protection contre la grêle.

11. Utilisation du générateur selon l'une quelconque des revendications de 1 à 8 pour déterminer les oiseaux d'aéroports ou de champs cultivés pour s'envoler et pour déterminer les grands animaux, tels que les ours et/ou les sangliers, etc., à fuir les propriétés foncières.

12. Utilisation du procédé selon la revendication 9 pour modifier les conditions météorologiques locales, comme pour la protection contre la grêle.

13. Utilisation du procédé selon la revendication 9 pour déterminer les oiseaux d'aéroports ou de champs cultivés à s'envoler et pour déterminer les grands animaux, tels que les ours et/ou les sangliers, etc., à fuir les propriétés foncières.
